(19)

Europäisches
Patentamt
European
Patent Office
Office européen
des brevets

(11) **EP 4 439 397 A1**

(12) **EUROPEAN PATENT APPLICATION**

(43) Date of publication:
**02.10.2024 Bulletin 2024/40**

(21) Application number: **23166038.2**

(22) Date of filing: **31.03.2023**

(51) International Patent Classification (IPC):
**G06N 3/098** *(2023.01)* **G06N 3/0455** *(2023.01)*

(52) Cooperative Patent Classification (CPC):
**G06N 3/098; G06F 21/14; G06F 21/6245;
G06N 3/0455**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Irdeto B.V.**
**2132 LS  Hoofddorp (NL)**

(72) Inventors:
 • **EISEN, Philip Allen**
  **2132 LS Hoofddorp (NL)**
 • **HICKIE, Thomas William**
  **2132 LS Hoofddorp (NL)**
 • **LIN, Tingting**
  **2132 LS Hoofddorp (NL)**

(74) Representative: **Boult Wade Tennant LLP**
**Salisbury Square House**
**8 Salisbury Square**
**London EC4Y 8AP (GB)**

(54) **SYSTEM AND METHOD FOR CREATING AND EXECUTING SECURED NEURAL NETWORKS**

(57) Disclosed implementations include a method for creating a secured neural network model. A programmatically generated "transcoding" layer can be added to the input and output of an existing neural network model. The transcoding, can be produced using a deterministic algorithm and can leverage known data transforms to protect input data by obfuscating and transforming the input and output data of the model.

EP 4 439 397 A1

**Description**

BACKGROUND

Artificial Intelligence (AI) refers to computer models that simulate the cognitive processes of human thought. Recently AI has found many applications. For example, ChatGPT is an AI model that interacts with users to provide information and creative works in a conversational way. Further, autonomous, and semi-autonomous vehicles can use AI to recognize objects (such as pedestrians, traffic signs, and other vehicles), and ride-sharing apps can use AI to determine wait times and real-time ride pricing. One method of AI is Machine Learning (ML), which is used to find the probability of a certain outcome using analytical experimentation. ML leverages large sets of historical "training" data that are fed into a statistical model to "learn" one or more specific tasks, such as facial recognition. The more training data used, the more accurate the ML probability estimate will be. The corollary is that, if corrupted and/or anomalous data is input into the ML model, by an attacker for example, the ML model can be rendered inaccurate and/or inoperable. Of course, this presents security issues in ML applications.

Various ML algorithms are well-known (e.g., ADAPand RMSProp). ML models can be implemented by "neural networks", also known as "artificial neural networks" (ANNs). Neural networks mimic the way that biological neurons signal one another in the human brain. Neural networks are comprised of multiple layers of nodes, including an input layer, one or more internal/hidden layers, and an output layer. Each node, or artificial "neuron", connects to another and has an associated weight and threshold. If the output of any individual node is above the specified threshold value, that node is activated, sending data to the next layer of the network.

Neural network models represent mathematical functions. In this way they are similar to traditional computer software, but they are expressed in a different language (not human readable) and are often computationally discovered as opposed to authored (machine learning as opposed to engineering). Often these models perform an operation on sensitive data, such as making a cancer diagnosis or computing the risk of defaulting on a loan. Further, the models implemented by a neural network represent a considerable investment in intellectual property that is worth protecting.

As noted above, neural networks are generally architected as a set of layers, where each layer includes neurons that perform a computing operation. The neurons in one layer connect to the neurons in proceeding layers using weighted synapses and, in this way, data flows forward through a neural network. The first layer, where data goes into the neural network, is called the "input layer." Numeric values held in input neurons are propagated forward to the neurons in hidden layers. The final layer, called the "output layer", reports the final numeric results of the neural networks processing.

The input layer of a neural network can accept numeric data that, for example, corresponds to various real-world features. For an image processing neural network, these features might be pixel intensities (such as a number between 0 and 255) corresponding to X and Y coordinates in an image. For a cancer diagnosis model, the inputs could be, for example, descriptions of tissue or even blood test results. Each feature typically corresponds to one input neuron. The same holds true at the outputs. In other words, conventional neural networks generally have a one-to-one mapping between data and meaning. For example, a cancer screening neural network will generally output the presence or absence of a tumor by way of a neuron (where 0.0 represents absence and 1.0 represents presence).

In conventional neural network architectures, there is no mechanism for protecting data. The one-to-one mapping between data and meaning represents a significant security vulnerability. For example, if Bob knows what neural network is being used to process data about Alice, Bob can easily determine details about Alice by looking at what numbers were assigned to the input neurons (even if Bob doesn't have access to the model). Bob might even be able to learn something very private about Alice (such as a cancer diagnosis or a credit score) if he is able to see the output (even without knowing what the inputs are). A skilled attacker could even reverse engineer the model implemented by a neural network by passing in lots of data and examining the output to 'infer' the model's behavior using an ML algorithm.

Data "masking" is the process of modifying sensitive data in such a way that it is of no or little value to unauthorized intruders while still being usable by software or authorized personnel. Data obfuscation can be used in programmed computing algorithms to protect information that is classified as personally identifiable information, or mission critical data, or is otherwise needs to be maintained as secure. However, the data must remain usable for the purposes of undertaking valid test cycles. Conventional neural network architectures are not readily adaptable to using obfuscated data because of the above-noted one-to-one mapping between data and meaning. Adapting existing data obfuscation methods (such as finite-ring encoding or even simple XOR based approaches) is difficult as a) we are limited in what mathematical operations we can apply to the data, and b) we are restricted to working with numbers as continuous scalar representations (as opposed to a finite sequence of bits). For this reason existing masking methods are not practical for use in neural networks.

In summary, conventional neural network architectures don't have a pragmatic mechanism for accepting protected data. The data coming in is almost always 'clear', and this represents a security/privacy issue. Service providers who might want to use neural networks must contend with the privacy requirements of their end users (which is often legislated, such as with GDPR in the EU) as well as the risk of exposing their models to the outside world by way of a public interface (an API for example). This is especially true in hosted environments like AMAZON WEB SERVICES (AWS) where a neural network is performing computations off-site in the cloud.

While there are many known solutions for securing the flow of data (such as SSL and obfuscation) these protections end by the time data is presented to the runtime environment that executes a neural network model (e.g., KERAS, TORCH, TENSORFLOW, etc...) because the models themselves are designed to accept 'raw' or clear data.

BRIEF SUMMARY

Disclosed implementations extend the protection boundary of neural networks and thus are more adherent to the principals of data security and privacy. Disclosed implementations include a method of embedding an implementation of an encoding mechanism (which is not created with machine learning) into an existing neural network to provide the neural network with more secure data interfaces.

One disclosed implementation includes a method for securing a model executed by a neural network, the method comprising: receiving an input specification data structure specifying inputs of an original input layer of an original neural network, wherein the original neural network is constructed to execute a model; fractionalizing the inputs; specifying weightings that define how much each fractionalized input contributes to neurons in the original input layer; storing the weightings in a weighting table; creating a protected input layer based on the fractionalized inputs and the weighting table; integrate the protected input layer to the original first hidden layer; and then adding the remainder of the original neural network as is (or with further processing as needed, such as other mechanisms to support other data protection strategies).

BRIEF DESCRIPTION OF THE DRAWING

The foregoing summary, as well as the following detailed description of the invention, will be better understood when read in conjunction with the appended drawings. For the purpose of illustrating the invention, there are shown in the drawings various illustrative embodiments. It should be understood, however, that the invention is not limited to the precise arrangements and instrumentalities shown.

FIG. 1 is a block diagram of an architecture of a protected neural network in accordance with disclosed implementations.
FIG. 2 is a block diagram showing an example of an input decoder layer in accordance with disclosed implementations.
FIG. 3 is a flowchart of a method for creating a protected neural network in accordance with disclosed implementations.

DETAILED DESCRIPTION

Certain terminology is used in the following description for convenience only and is not limiting. Unless specifically set forth herein, the terms "a," "an" and "the" are not limited to one element but instead should be read as meaning "at least one." The terminology includes the words noted above, derivatives thereof and words of similar import.

Disclosed implementations add a programmatically generated "transcoding" layer to the input of an existing neural network model (just the model definition, not the runtime). These layers can be produced using a deterministic algorithm and can function similar to data transforms used in conventional data obfuscation techniques in that they protect data by obfuscating and transforming the data (similar to an encryption algorithm).

The architecture of the disclosed implementations allows processing inputs that are an encoded representation of data. The encodings that are embedded in one model are not necessarily the same as the encodings embedded in another model. Instead of each input corresponding a single value (e.g., 3.14159) the inputs can be re-encoded as a set of multiple values (e.g., [-0.9987, 0.3350, - 0.5608, 8.0133, -0.5724] = 3.14). This is of course expandable to any number of inputs. The matrix used to decode encoded values can be integrated into the first hidden layer of the protected neural network so that the original data doesn't get reconstructed in its original form (only the hidden neurons accumulator is constructed).

Since the inputs of the model are obfuscated, protected models constructed in accordance with disclosed implementations are more difficult to reverse engineer. Cloning and adversarial attacks against a model protected in this way are more difficult to complete because additional (secret) information is required to deduce what the underlying model is doing. With the proposed method, side-channel attacks (like monitoring memory consumption to determine what's in memory) will also be more difficult as the raw un-obfuscated form of the data does not directly exist.

Unique protected instances of an existing neural network can be generated in a manner that keeps user data private. Every user (or even session) can have a unique corresponding private and protected version of a neural network that uses a set of obfuscation parameters (the embedded weights and biases). This locks a neural network model to a specific use case and renders it incompatible with all other instances of the model. While it's possible that someone with access to a protected models' weights and biases could reverse engineer everything to extract the original model, this is time consuming and resource intensive (depending on the circumstances). Further, an attacker who might reverse engineer the protections on one instance of a neural network still does not gain access to all other instances of the model. The protections for each model, and therefore the interfaces to each model, are unique.

For example, an AI/ML based service that can provide a medical diagnosis or monitor a patient for vital signs could provide medical information to a third party, thus requiring a whole chain of actors who may or may not be trustworthy and/or able to secure data. However, medical institutions, patients, and government regulators, will want to maintain privacy of the data. Even if an attacker were to capture the data going into a protected model (for example, after the data has been decrypted and is stored in memory) the attacker wouldn't know what the data signifies and the attacker could not send the data to another copy of a protected model to check the output because the data is tied to a specific instance. This also limits the potential for accidental disclosure (such as inadvertently logging model input to disc). Disclosed implementations can be used in conjunction with other cryptographic solutions and are useful for AI/ML deployments in which maintaining the privacy of user data and/or limiting access to a model is important.

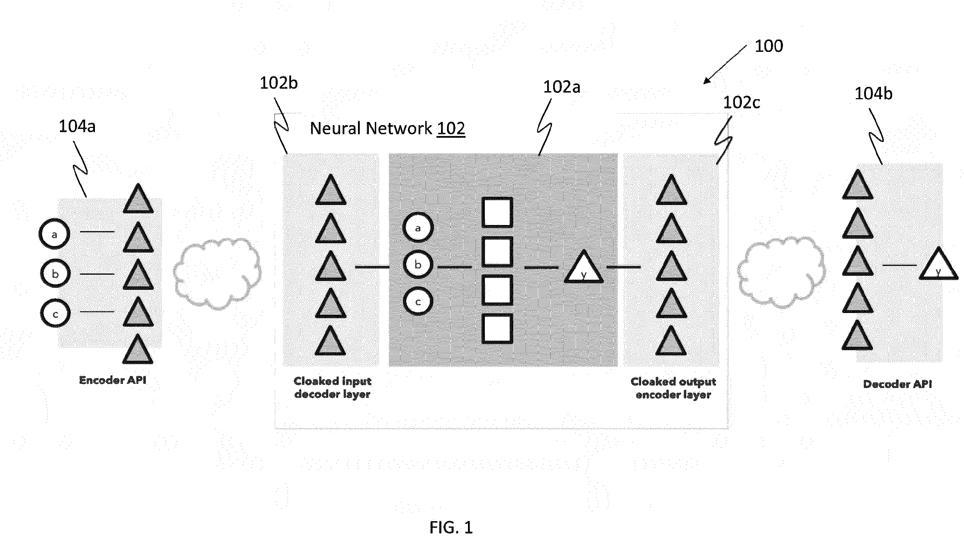

FIG. 1 illustrates the architecture of protected AI/ML model 100, including a neural network, in accordance with disclosed implementations. The method for creating the protected model is described later. Instead of accepting "clear" un-encoded data in its raw form, protected model 100 accepts an encoded data representation. In other words, before data is sent to a neural network the data can be encoded. Encoding can be accomplished on any device, such as a smart phone, a desktop PC, or an edge device in a conventional manner. Protected model 100 includes neural network 102 which can include a conventional neural network 102a. Protected model 100 also includes input decoder layer 102b and output encoder layer 102c. Input data can be sent to whatever service hosts protected model 100, and processing can occur in a manner similar to a conventional AI/ML model (e.g., no special runtimes or other requirements are needed). However, the neural network of protected model 100 has a built-in decoder layer 102b that converts encoded input data into data that is compatible with the internal workings of neural network 102a. The input data can be encoded in a manner that is compatible with the transcoding layer using, for example, encoder AI 104a executed on a device such as a smart phone, an edge device, or other computing device.

Neural network 102 can process the data in the same manner that an unprotected neural network model would process data. Instead of producing "raw" predictions, output encoder layer 102c encodes the output into a "cloaked" form. The cloaked model output, at its destination, gets decoded into clear form using, for example, decoder API 104b executed on a device such as a smart phone, an edge device, or other computing device. All of this can occur *in situ* with respect to the model and is fully compatible with existing AI/ML frameworks. Converting data into and out of the protected format (the input and output of the neural network) can be accomplished via an API, so the only real change to workflow from an engineering perspective is all "client side" - i.e., data needs to be encoded and decoded in a conventional manner.

Disclosed implementations can use a two-part method for encoding and decoding that can be integrated into an existing neural network model in a manner that doesn't require any changes to an existing runtime environment for AI/ML. Additionally, this method does not require the cooperation of the data scientists who built the model that's being protected. In the first part of the encoding method, the representation of data going into, and out of, a protected neural network is changed by re-distributing what would normally be a value for a single neuron across multiple neurons (referred to as "fractionalizing" herein). In the second part of the encoding method, the order in which neurons are connected is randomized. These two encoding method parts are discussed in greater detail below. Protected model 100 receives data that, to an outside observer, appears more like random noise than a structured signal thereby hiding the processing that is occurring. The new encodings can be produced in as many unique instances as is desired.

Input decoder layer 102b and output encoder layer 102c can be fractionalizing layers, i.e., layer 102b can accept many encoded inputs and combines them into a single decoded value and layer 102c can accept a single input and encode it into multiple inputs. There are many ways to do this. For example, each "fractional" neuron could correspond to a power of two (1, 2, 4, 8, 16, 32, ...) similar to how binary encoding works. In another example, the fractional neurons can each correspond to a fraction using the value $\pi$ ($1/\pi$, $2/\pi$, $3/\pi$, ...). The fractional neurons could even correspond to some arbitrary random value (e.g., 1, -4.6, 1235, 0.234234, 170778, 98). Since a single number can be represented as a sum of states, the number can be represented in a way that is compatible with the architecture of many conventional neural networks. Once the fractionalization mechanism has been selected, an interface to an existing neural network can be constructed by adding a fully connected (dense) layer to the input and assigning the weights in such a way as to replicate the fractionalizing.

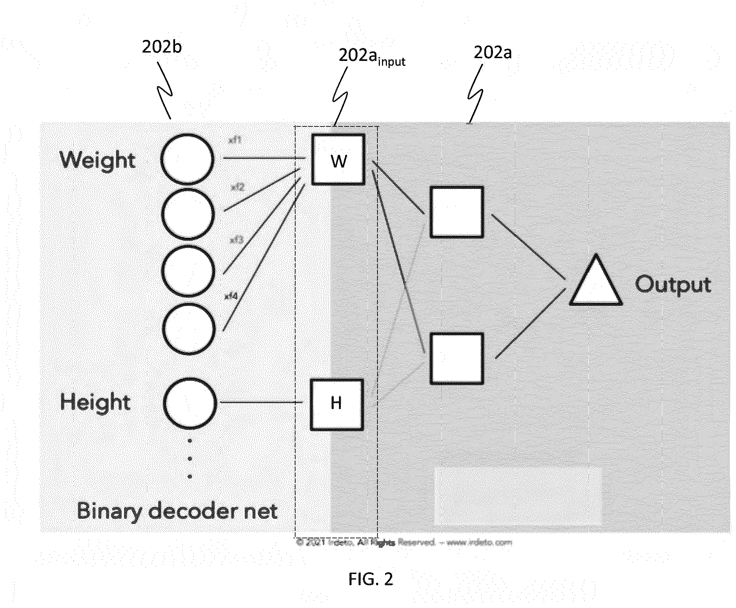

As an example, as shown in FIG. 2, an unprotected original model can be implemented by neural network 202a that expects "weight" W and "height" H as inputs at input layer $202a_{input}$. Input encoder layer 202b can use a simple "power-of-two" encoding function (like binary) to fractionalize the input across four neurons for each of features W and H. Stated differently, there will be four neurons to capture the input "weight", and four neurons to capture the input "height". In this example a new "de-fractionalizing" input encoder layer 202b consisting of 8 input neurons is created.

The first four de-fractionalizing input neurons connect to original "weight" W input neuron with connections weights of $X_{f1}$=1.0, $X_{f2}$=2.0, $X_{f3}$=4.0, and $x_{f4}$= 8.0. The connection weights of these first four inputs to the original "height" H neuron can all be set to 0, and thus contribute nothing to the H neuron. The second set of 4 de-fractionalizing neurons can connect to the original "weight" neuron with a value of 0, but to the original "height" neuron with values of 1.0, 2.0, 4.0, and 8.0, respectively to thereby contribute the H neuron but not the W neuron.

In the example of FIG. 2, passing a fractionalized input of 1,0,0,1,0,0,1,1 would correspond to an input of weight=9 ($1\times1 + 1\times8$), and an input height=12 ($1\times4 + 1\times8$). To manage the output, we just do the reverse - add a new fully connected output encoder layer where the weights from the original output to the fractional output encoder layer determine how the number gets distributed.

Consider the example of a neural network that accepts 'true' and 'false' values - even if that state were to be spread across an ever-increasing number of neurons that correspond to some power of two, all the information will still be concentrated in one or two places. The table below illustrates inputs that are similar but which have are expressed as different numbers of fractional inputs.

| | 1 Input | 2 Inputs | 3 Inputs | 4 Inputs |
|---|---|---|---|---|
| | 0 | [0,0] | [0,0,0] | [0,0,0,0,0] |
| | 1 | [0,1] | [0,0,1] | [0,0,0,0,1] |
| | 2 | [1,0] | [0,1,0] | [0,0,0,1,0] |

It is more desirable to use an encoding scheme that 'spreads' values across the input neurons in a way that doesn't reveal anything about how the decoding might work. This can be accomplished by carefully choosing how the weights are assigned within the fractionalizing layers. Some specific examples are discussed below. One method is to use a random number generator to find encodings for a particular value. In this example, the same value can produce multiple encodings, and the encoded values give little information about the encoding method.

A number N of fractional numbers used to represent a source number can be selected. A weight table, for example a table of N+1 entries, can be created where each entry is just a random number between, for example, -1.0 and +1.0 (though this parameter range can be tuned for the specific application). The last entry at N+1 can be a special bias term. A source number, x, can be transcoded by performing the following steps:

- choose a set of N+1 numbers (the Weight Table) as weights. Call these $w_1$ to $w_n$ and call the last number b (for bias).
- to encode x, we choose N-1 numbers $e_1$ to $e_{n-1}$ at random and compute $e_n$ as:

$$e_n = [x - \text{sum}(i=1..n\text{-}1, w_i e_i) + b] / w_n$$

- select the numbers in e, the contribution table, to represent the encoded values with respect to the weights and bias.

Below is an implementation of this method written in Python.

```
# Python code to make a random weight table used for fractional encoding
# This table will eventually be embedded (along with others) into an ANN
def makeRandomWeightTable(tableLen=10, minVal=-1.0, maxVal=1.0):
  wt = []

  for i in range(0, tableLen):
      v = random.uniform(minVal, maxVal)
      wt[I] = v

  bias = random.uniform(minVal, maxVal)
  return wt,bias
```

```
# Python code to fractionalize the value v across a weight table
# These become the encoded inputs into an ANN that been protected
def fractionalizeInputValue(weightTable, v, bias=0, minC=-1.0, maxC=1.
0, targetIndex=0):
    tableLen = len(weightTable)
    c = [0] * tableLen
    v = v + bias

    if targetIndex == -1:
        targetIndex = random.randint(0, tableLen - 1)

    cSum = 0
    for i in range(0, tableLen):
        if i != targetIndex:
            c[i] = random.uniform(minC, maxC)
            cSum += c[i] * weightTable[i]

    c[targetIndex] = (v - cSum) / weightTable[targetIndex]
    return c
```

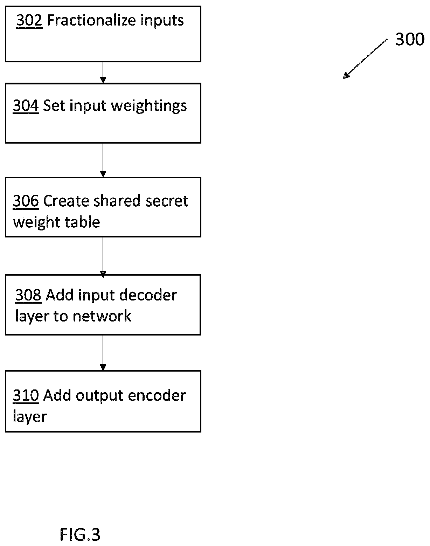

FIG. 3 illustrates a method 300 for creating a protected model implemented by a neural network in accordance with disclosed implementations. Method 300 creates a unique obfuscated interface to an existing neural network that is to be protected. At 302, the input of the neural network is fractionalized by, for example, expanding the number of inputs that a neural network accepts. Where the original neural network might have accepted only two inputs (A and B), the new protected neural network could have many inputs in order to hide the original data inside of multiple values. This also provides more flexibility when it comes to encoding/decoding the input values. For example, each of the original inputs can be fractionalized to be represented by 5 values. This means the new interface in this example will expect 10 inputs; five corresponding to input A, and five corresponding to input B. At step 304 weightings can be set to define how much one fractionalized input neuron contributes to the neurons in the next layer (the original input layer). Each of the weights of the first hidden layer are connected to the encoded inputs by altering their existing weights to compensate for the new fractionalizing weights. At step 306, the weights and inputs can be stored as a weighting table data structure to be used as a basis for creating the input decoder layer and the output decoder layer. Both steps 302 and 304 can be accomplished based on an input specification data structure that specifies the input variables expected by the original input layer.

The weight table, or other encoding indicator, serves as a shared secret. Since a many-to-one relationship has been defined, values can be assigned to the weights that connect each of the expanded inputs to respective destinations in the existing neural network. These weights act to recombine the inputs into their original form with respect to each hidden layer neuron. Data that has been encoded with this knowledge will produce valid input for the original neural network, whereas data that wasn't prepared with this knowledge will not.

The table of weights can be a set of random numbers, or something engineered to exhibit specific properties. In one example the weight table can be a set of multiple "0"s and a single "1", so that only one of the expanded inputs actually contributed to the original neural network, but it would be difficult for an attacker to know which one of the expanded inputs was the contributing input. Further pseudorandom numbers between some range of values can be used as the weighting, where the range is chosen to ensure encodings resulted in many large numbers (or in other cases, many small numbers). In another example, the table can be designed to force 'guesses' to result in a certain failure condition within the neural network, such as by designing a weight table where guessing '1' as an input would always produce a 'negative' model output. Further, the weight table can be configured to require the presence of specific attributes (like a signature).

An example of code for creating a weight table is set forth below. # Make a set of 'secret keys' def makeRandomFractionalTable(tableLen=10, minVal=-1.0, maxVal=1.0): ft = [] for i in range(0, tableLen): v = random.uniform(minVal, maxVal) ft.append(v) return ft -- END -

At step 308, the weights can be embedded within the neural network as a new first layer (input decoder layer), wired directly into the first hidden layer of the unprotected network. Embedding this table into an existing network can be accomplished using an API (such as the Python API Keras) that allows parsing the original network. The following is an example of code for embedding the weight table.

```
# Create a new model using the new architecture, and append the old model
augmentedModel = Sequential()

# Calculate the way we need to change the first hidden layers weights so as to accept
obfuscated data
oxDim = original number of inputs
fwRowNum = number of neurons in the first hidden layer
_expandFactor = number of encoded inputs per unencoded inputs

for i in range (0,oxDim):
        for j in range (0,_expandFactor):
                fwTemp = [0] * fwRowNum # Initialize all weights to 0
                for k in range (0,fwRowNum):
                        fwTemp[k] =
cipherWeights[i][j]*originalWeightsFirstLayer[i][k]
                        newfw.append (fwTemp)
fwDecCombine = [np.asarray(newfw), np.asarray (originalBiasFirstLayer)]
# Create a new input layer – it accepts encoded input and connects to the original
hidden layer
augmentedModel.add(Dense(_totalOriginalInputs,
                                input_dim=_newModelNumInputs,
                                activation='linear'))
# Add the existing models layers (except the input layer) to the one we just created
for i in range(1, len (model.layers)):
        augmentedModel.add(model.layers[i])

# Assign the weights we computed earlier so that the hidden layers features are
computed
# using the encoded values.
augmentedModel.layers[0].set_weights(fwDecCombine)
-- END --
```

The following code can be used to fractionalize the value v across a weight table. These become the encoded inputs into an ANN that is been protected.

```
fractionalizeInputValue(weightTable, v, bias=0, minC=-1.0, maxC=1.0, targetIndex=0): 4 tableLen = len(weightTable) 5
e = [0] * tableLen 6 v = v + bias 7 8 if targetIndex == -1: 9 targetIndex = random.randint(0, tableLen - 1) 10 11 cSum =
0 12 for i in range(0, tableLen): 13 if i != targetIndex: 14 e[i] = random.uniform(minC, maxC) 15 cSum += e[i] * weightTable[i]
16 17 e[targetIndex] = (v - cSum) / weightTable[targetIndex] 18 return e --END-
```

The result is a list of numbers, e, that act as inputs to a protected neural network. Passing this contribution table to the neural network will result in the new first layer decoding the numbers as inputs (features) in the hidden layer. After that, the network can operate in a conventional manner.

In disclosed implementations, a new set of inputs and a bias is created. This becomes the new input layer for the network and connects to the old first hidden layer. As an example, if we wanted to send the number 3.14 to the network, the above steps can be accomplished to compute a 'contribution table'. Since random numbers are used, the same value can be encoded in a near infinite number of ways. e.g. e = fractionalizeInput(weights, 3.14) -> [0.1586, 0.2986, - 0.8057, 8.3496, -0.9053]. When decoding by recombining with the chosen weights, this will = 3.14 when decoded. Other protections can be added to the network. For example, the order of the inputs can be randomized so that consecutive encoded inputs no longer correspond to consecutive original inputs (e.g., A3,B2,B1 ,A1 ,A4,B4,A2,B3).

Randomizing the order wouldn't be practical if we only had two (or a few) neurons to shuffle. However, since we can make a network consist of any number of inputs we want, randomization can be very useful. Stated differently, because the encoding maps a single scalar to an arbitrary length vector, other methods (such as order randomization) are more useful.. In step 310, the output encode layer is created and connected to the last hidden layer of the network (the output layer of the original network).

Various known encoding techniques, such as data transformations, can be applied for accomplishing encoding on the input to a protected neural network. Disclosed implementations are compatible with conventional neural networks and AI/ML runtime. A "protected" model is still just a model. Methods of the disclosed implementations can be automated. The only change to the end user is an extra encoding step that happens before the model has been run

The method of the disclosed implementations can be accomplished by one or more computing devices including functional "modules" comprised of code executable by a computer processor to carry out the functions described above. The computing devices implementing disclosed implementations can include a variety of tangible computer readable media. Computer readable media can be any available tangible media that can be accessed by device and includes both volatile and non-volatile media, removable and non-removable media. Tangible, non-transient computer storage media include volatile and non-volatile, and removable and non-removable media implemented in any method or technology for storage of information such as computer readable instructions, data structures, program modules or other data.

The various data and code can be stored in electronic storage devices which may comprise non-transitory storage media that electronically stores information. The electronic storage media of the electronic storage may include one or both of system storage that is provided integrally (i.e., substantially non-removable) with the computing devices and/or removable storage that is removably connectable to the computing devices via, for example, a port (e.g., a USB port, a firewire port, etc.) or a drive (e.g., a disk drive, etc.). The electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media.

Processor(s) of the computing devices may be configured to provide information processing capabilities and may include one or more of a digital processor, an analog processor, a digital circuit designed to process information, an analog circuit designed to process information, a state machine, and/or other mechanisms for electronically processing information. As used herein, the term "module" may refer to any component or set of components that perform the functionality attributed to the module. This may include one or more physical processors during execution of processor readable instructions, the processor readable instructions, circuitry, hardware, storage media, or any other components.

It will be appreciated by those skilled in the art that changes could be made to the disclosed implementations without departing from the broad inventive concept thereof. It is understood, therefore, that this invention is not limited to the disclosed implementations, but it is intended to cover modifications within the spirit and scope of the present invention as defined by the appended claims.

**Claims**

1. A method for securing a model implemented as a neural network, the method comprising:

   receiving an input specification data structure specifying inputs of an original input layer of an original neural network, wherein the original neural network is constructed to execute a model;

fractionalizing the inputs to thereby create fractionalized inputs;
specifying weightings that define how much each fractionalized input contributes to neurons in the original input layer;
storing the weightings in a weighting table;
creating a protected input layer based on the fractionalized inputs and the weighting table whereby the protected input layer is operative to decode encoded inputs; and
connecting the protected input layer to the original input layer to thereby create a secured model.

2. The method of claim 1, wherein the fractionalizing comprises selecting a number N of values of $e_1$ to $e_n$ to represent an input value.

3. The method of claim 2, wherein the weighting table includes N+1 fields respectively storing weightings $w_1$ to $w_n$ and a bias value b.

4. The method of claim 3, wherein the protected input layer performs a decoding operation to decode encoded inputs $e_n$ based on the following formula:

$$e_n = [x - \text{sum}(i=1..n-1, w_i e_i) + b]/w_n$$

5. The method of any one of the preceding claims, further comprising randomizing the order of the inputs.

6. The method of any one of the preceding claims, wherein the weighting table serves as a shared secret for encoding data input into the secured model.

7. The method of any one of the preceding claims, wherein the weightings are embedded within the neural network as a new input layer of the secured model.

8. A secured model implemented as a neural network, the secured model comprising:

an unsecured model implemented as a neural network having an original input layer, and output layer, and at least one hidden layer; and
a protected input layer connected to the original input layer, where the protected input layer is created by receiving an input specification data structure specifying inputs of the original input layer, fractionalizing the inputs to thereby create fractionalized inputs, specifying weightings that define how much each fractionalized input contributes to neurons in the original input layer, storing the weightings in a weighting table, whereby the protected input layer is operative to decode encoded inputs.

9. The secured model of claim 8, wherein the fractionalizing comprises selecting a number N of values of $e_1$ to $e_n$ to represent an input value.

10. The secured model of claim 9, wherein the weighting table includes N+1 fields respectively storing weightings $w_1$ to $w_n$ and a bias value b.

11. The secured model of claim 10, wherein the protected input layer performs a decoding operation to decode encoded inputs $e_n$ based on the following formula:

$$e_n = [x - \text{sum}(i=1..n-1, w_i e_i) + b]/w_n$$

12. The secured model of any one of claims 8 to 11, wherein the order of the inputs is randomized in the secured input layer.

13. The secured model of any one of claims 8 to 12, wherein the weighting table serves as a shared secret for encoding data input into the secured layer.

14. The secured model of any one of claims 8 to 13, wherein the weightings are embedded within the secured input layer.

**15.** A system arranged to carry out the method of any one of claims 1 to 7.

FIG. 1

Weight

Height

Binary decoder net

W

H

Output

202b 202a_input 202a

FIG. 2

302 Fractionalize inputs

300

304 Set input weightings

306 Create shared secret weight table

308 Add input decoder layer to network

310 Add output encoder layer

FIG.3

Europäisches
Patentamt

European
Patent Office

Office européen
des brevets

# EUROPEAN SEARCH REPORT

Application Number

EP 23 16 6038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 640 856 A1 (FUJITSU LTD [JP]) 22 April 2020 (2020-04-22) * paragraph [0046] – paragraph [0066] * * figures 1-9 * ----- | 1-15 | INV. G06N3/098 G06N3/0455 |
| Y | WO 2021/174370 A1 (HUAWEI TECH CO LTD [CN]; BANITALEBI DEHKORDI AMIN [CA] ET AL.) 10 September 2021 (2021-09-10) * paragraph [0090] – paragraph [0091] * ----- | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 30 July 2023 | Baldan, Marco |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 16 6038

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2023

| Patent document cited in search report | | Publication date | Patent family member(s) | | Publication date |
|---|---|---|---|---|---|
| EP 3640856 | A1 | 22-04-2020 | EP | 3640856 A1 | 22-04-2020 |
| | | | JP | 2020068016 A | 30-04-2020 |
| | | | US | 2020125933 A1 | 23-04-2020 |
| WO 2021174370 | A1 | 10-09-2021 | CN | 115104108 A | 23-09-2022 |
| | | | EP | 4100887 A1 | 14-12-2022 |
| | | | US | 2022414432 A1 | 29-12-2022 |
| | | | WO | 2021174370 A1 | 10-09-2021 |

EPO FORM P0459

For more details about this annex : see Official Journal of the European Patent Office, No. 12/82